# EUROPEAN PATENT SPECIFICATION

(11) **EP 2 192 646 B1**
(45) Date of publication and mention of the grant of the patent: **07.11.2012**
(21) Application number: 08831119.6
(22) Date of filing: 09.09.2008
(51) Int. Cl.: H01M 8/02, C08F 8/40, C08F 259/08, C08J 5/22, H01B 1/06, H01B 13/00, H01M 8/10

(54) **SOLID POLYMER ELECTROLYTE MEMBRANE, METHOD FOR PRODUCTION OF SOLID POLYMER ELECTROLYTE MEMBRANE, AND FUEL CELL**
FESTE POLYMERELEKTROLYTMEMBRAN, VERFAHREN ZUR HERSTELLUNG DER FESTEN POLYMERELEKTROLYTMEMBRAN UND BRENNSTOFFZELLE
MEMBRANE ÉLECTROLYTE POLYMÈRE SOLIDE, PROCÉDÉ DE PRODUCTION D'UNE MEMBRANE ÉLECTROLYTE POLYMÈRE SOLIDE, ET PILE À COMBUSTIBLE

(30) Priority: 12.09.2007 JP 2007236806
(43) Date of publication of application: 02.06.2010
(73) Proprietor: Shin-Etsu Chemical Co., Ltd., Tokyo 100-0004 (JP)
(72) Inventor: TAKAHASHI, Mitsuhito, Annaka-shi Gunma 379-0195 (JP)
(74) Representative: Nash, David Allan
(86) International application number: PCT/JP2008/066224
(87) International publication number: WO 2009/034965

(56) References cited:
- WO-A1-99/62620
- WO-A1-2006/120871
- WO-A1-2006/120871
- WO-A1-2006/134801
- WO-A2-2005/036687
- JP-A- 2004 022 393
- JP-A- 2005 025 945
- JP-A- 2005 310 454
- US-A1- 2007 207 359
- DATABASE WPI Week 200322 Thomson Scientific, London, GB; AN 2003-224441 XP002664861, & JP 2002 313364 A (HITACHI CABLE LTD) 25 October 2002 (2002-10-25)

## Description

### TECHNICAL FIELD

This invention relates to an electrolyte membrane having improved oxidation resistance for use in polymer electrolyte fuel cells (PEFCs), a method for producing the fuel cell electrolyte membrane, and a fuel cell.

### BACKGROUND ART

Fuel cells using solid polymer electrolyte (SPE) membranes are expected to find a wide variety of commercial applications as a power source or simple auxiliary power source for electric vehicles because of a low operating temperature below 100°C and a high energy density. Involved in these PEFCs are important elemental technologies relating to such components as electrolyte membrane, platinum based catalyst, gas diffusion electrode, and electrolyte membrane-electrode assembly. Among these, the technology relating to electrolyte membrane and electrolyte membrane-electrode assembly is one of the most important technologies governing the fuel cell performance.

In PEFCs, a fuel diffusion electrode and an air diffusion electrode are joined to opposing surfaces of an electrolyte membrane, so that the electrolyte membrane and electrodes form a substantially integral structure. Then the electrolyte membrane functions as an electrolyte for conducting protons and also plays the role of a diaphragm for preventing direct intermixing between hydrogen or methanol as the fuel and air or oxygen as the oxidant even under pressure.

Such electrolyte membranes are required as the electrolyte to have a high rate of proton transfer, a high ion exchange capacity, and a consistent, high water retention to maintain a low electric resistivity. From the role of a diaphragm on the other hand, electrolyte membranes are required to have a high mechanical strength, dimensional stability and chemical stability in long-term service, and to rid of excessive permeability to hydrogen gas or methanol as the fuel and oxygen gas as the oxidant.

At the present, perfluorosulfonic acid/fluorocarbon resin membranes developed by E.I. duPont and commercially available as Nafion® are generally used as the electrolyte membrane. Conventional fluorocarbon electrolyte membranes as typified by Nafion® suffer from the problem of increased cost due to a number of steps involved in the manufacture process which has to start from the synthesis of monomers, and this problem becomes a serious bar to commercial application.

Efforts have thus been made to develop low-cost electrolyte membranes as a substitute for Nafion® and analogues. With respect to radiation-induced graft polymerization, JP-A 2002-313364 and JP-A 2003-82129 (Patent Documents 1 and 2) propose a method for producing a SPE membrane by irradiating a fluorocarbon resin membrane with radiation to create radically active sites in the fluorocarbon resin, and grafting a radical-polymerizable hydrocarbon monomer thereto, followed by sulfonation.

The membrane obtained from graft polymerization of a radical-polymerizable hydrocarbon monomer by a radiation-induced graft polymerization process has a high degree of grafting and hence, a high proton conductivity, but suffers from lack of oxidation resistance.

For improving the oxidation resistance, JP-A 2001-307752 (Patent Document 3) discloses a polymer-inorganic compound composite proton conductive membrane obtained by a preparation method comprising synthesizing an inorganic compound composed mainly of silicon oxide and phosphoric acid derivatives in a solution containing an aromatic polymeric compound having a sulfonic acid group, and evaporating off the solvent. This membrane, however, is devoid of chemical bonds between the polymer and the inorganic compound, leaving the problems that the inorganic compound is eliminated and the Si-O-P linkage is hydrolyzed, allowing for leach-out.

Also, JP-A 2004-79252 (Patent Document 4) discloses a high durability SPE membrane made of a composition comprising a polymer having a hydrocarbon moiety and a phosphoric acid group-containing polymer resulting from polymerization of a phosphoric acid group-containing unsaturated monomer having at least one phosphoric acid group and at least one ethylenically unsaturated bond in a molecule. This membrane, however, has the problem that the phosphoric acid group-containing side chain is susceptible to hydrolysis under hot acidic conditions.

Patent Document 1: JP-A 2002-313364
Patent Document 2: JP-A 2003-082129
Patent Document 3: JP-A 2001-307752
Patent Document 4: JP-A 2004-079252

### DISCLOSURE OF THE INVENTION

### Problem to be Solved by the Invention

An object of the invention which has been made under the above-discussed circumstances is to provide a SPE membrane having improved oxidation resistance and hydrolysis resistance for use in fuel cells, a method for producing a SPE membrane for use in fuel cells, and a fuel cell.

### Means for Solving the Problem

Making extensive investigations to attain the above object, the inventor has found that an electrolyte membrane can be prepared by irradiating a resin with radiation, co-graft-polymerizing a radical-polymerizable monomer having an ion-exchangeable functional group or capable of introducing an ion-exchangeable functional group and a radical-polymerizable monomer having a hydroxysilyl or alkoxysilyl group to the resin, thereafter, when the radical-polymerizable monomer capable of introducing an ion-exchangeable functional group is used, causing the monomer to introduce the ion-exchangeable functional group, impregnating the resin with a phosphorus-containing monomer having a hydroxysilyl or alkoxysilyl group, and preferably further effecting heat treatment for provoking condensation reaction between the hydroxysilyl or alkoxysilyl group in the grafted polymer and the hydroxysilyl or alkoxysilyl group of the phosphorus-containing monomer with which the resin has been impregnated and that the resultant electrolyte membrane has such oxidation resistance that it is suited for use in fuel cells.

Accordingly, the present invention provides a SPE membrane for use in fuel cells, a method for producing a SPE membrane for use in fuel cells, and a fuel cell, as defined below.
[I] A method for producing a solid polymer electrolyte membrane, comprising the steps of
   irradiating a fluorocarbon resin or hydrocarbon resin with radiation,
   co-graft-polymerizing a radical-polymerizable monomer having an ion-exchangeable functional group or capable of introducing an ion-exchangeable functional group and a radical-polymerizable monomer having a hydroxysilyl or alkoxysilyl group to the resin,
   thereafter, when the radical-polymerizable monomer capable of introducing an ion-exchangeable functional group is used, causing to introduce the ion-exchangeable functional group, and
   impregnating the resin with a phosphorus-containing monomer having a hydroxysilyl or alkoxysilyl group.
[II] A method for producing a solid polymer electrolyte membrane according to [I], further comprising heat treating the resin after impregnation for provoking condensation reaction between the hydroxysilyl or alkoxysilyl group in the grafted polymer and the hydroxysilyl or alkoxysilyl group of the phosphorus-containing monomer with which the resin has been impregnated.
[III] A method for producing a solid polymer electrolyte membrane according to [I] or [II], wherein the fluorocarbon resin is at least one member selected from the group consisting of polytetrafluoroethylene, tetrafluoroethylene-perfluoroalkyl vinyl ether copolymers, tetrafluoroethylene-hexafluoropropylene copolymers, and ethylene-tetrafluoroethylene copolymers.
[IV] A method for producing a solid polymer electrolyte membrane according to [I], [II] or [III], wherein the radical-polymerizable monomer having a hydroxysilyl or alkoxysilyl group is a polymerizable monomer having a styryl group in the molecule.
[V] A solid polymer electrolyte membrane **characterized in that** it is prepared by the method of any one of [I] to [IV].
[VI] A fuel cell **characterized in that** the solid polymer electrolyte membrane of [V] is disposed between a fuel electrode and an air electrode.
[VII] A fuel cell according to [VI] which is of direct methanol type using methanol as the fuel.

### ADVANTAGEOUS EFFECTS OF INVENTION

The fuel cell SPE membrane according to the invention, especially the fuel cell SPE membrane obtained from heat-induced condensation reaction of a phosphorus-bearing monomer having a hydroxysilyl or alkoxysilyl group with a hydroxysilyl or alkoxysilyl group in the co-grafted polymer has both improved oxidation resistance and hydrolysis resistance. Using this electrolyte membrane, a fuel cell of drastically improved performance can be fabricated.

### BEST MODE FOR CARRYING OUT THE INVENTION

Now the invention is described in more detail. The method for producing a SPE membrane for fuel cells according to the invention involves the steps of irradiating a resin with radiation, co-graft-polymerizing a radical-polymerizable monomer having an ion-exchangeable functional group or capable of introducing an ion-exchangeable functional group and a radical-polymerizable monomer having a hydroxysilyl or alkoxysilyl group to the resin, and when the radical-polymerizable monomer capable of introducing an ion-exchangeable functional group is used, causing to introduce the ion-exchangeable functional group, thereafter impregnating the resin with a phosphorus-containing monomer having a hydroxysilyl or alkoxysilyl group, and preferably further heating for provoking condensation reaction between the hydroxysilyl or alkoxysilyl group in the grafted polymer and the hydroxysilyl or alkoxysilyl group of the phosphorus-containing monomer with which the resin has been impregnated.

Examples of the resin used herein include fluorocarbon resins such as tetrafluoroethylene-hexafluoropropylene copolymer resins (FEP), tetrafluoroethylene-perfluoroalkyl vinyl ether copolymer resins (PFA), ethylene-tetrafluoroethylene copolymer resins (ETFE), and vinylidene fluoride resins (PVDF), and hydrocarbon resins such as polyethylene, polypropylene, polyether ether ketone (PEEK), and polyether sulfone (PES), which may be used alone or in admixture of two or more. The shape of the resin may be film or the like, but is not particularly limited.

With respect to graft polymerization, there are a previous irradiation mode wherein a resin is previously irradiated with radiation to create radicals that can trigger grafting, and graft reaction is then performed on a monomer in contact with the resin, and a simultaneous irradiation mode wherein radiation is irradiated in the co-presence of a monomer and a resin. The inventive method may adopt either of the modes. The resin film has a thickness which is preferably in the range of 10 to 100 µm, more preferably 10 to 50 µm, but not limited thereto.

Examples of the radiation which is irradiated to the resin to render it ready for graft polymerization of radical-polymerizable monomers include gamma-ray, x-ray, electron beam (EB), ion beam, and ultraviolet radiation, with the γ-ray and EB being preferred for ease of radical creation.

An absorption dose of radiation is preferably at least 1 kGy, more preferably 1 to 200 kGy, and even more preferably 1 to 100 kGy. In a dose of less than 1 kGy, less radicals may be created and hence, grafting may become difficult. A dose in excess of 200 kGy provides so high a grafting degree that the electrolyte membrane may lose mechanical strength.

Moreover, irradiation is preferably performed in an inert gas atmosphere such as helium, nitrogen or argon gas. The inert gas should preferably have an oxygen concentration of up to 100 ppm, and more preferably up to 50 ppm, although it is not necessarily needed to perform irradiation in the absence of oxygen.

- In the fuel cell SPE membrane of the invention, one radical-polymerizable monomer to be graft polymerized to the irradiated resin is not particularly limited as long as it has an ion exchangeable functional group or is capable of introducing an ion exchangeable functional group. Preferably one or more monomers selected from radical-polymerizable hydrocarbon monomers and radical-polymerizable fluorinated hydrocarbon monomers are used.

The preferred radical-polymerizable hydrocarbon monomers to be grafted are those radical-polymerizable hydrocarbon monomers which are polymerizable by themselves and which have an ion exchangeable functional group, or are free of an ion exchangeable functional group, but capable of imparting an ion exchangeable functional group through chemical reaction.

Suitable ion exchangeable functional groups used herein include phenolic hydroxyl, carboxylic acid, amine, sulfonic acid and phosphoric acid groups. Since acyloxy, ester, and acid imide groups can be quantitatively converted through hydrolysis into ion exchangeable functional groups such as phenolic hydroxyl and sulfonic acid groups, monomers having such groups may also be used.

Illustrative preferred examples of radical-polymerizable hydrocarbon monomers having an ion exchangeable functional group include acrylic acid, methacrylic acid, maleic acid, fumaric acid, vinylsulfonic acid, styrenecarboxylic acid, styrenesulfonic acid, α-methylstyrenecarboxylic acid, α-methylstyrenesulfonic acid, acrylamidomethylpropanesulfonic acid, or salts thereof or C₁-C₁₀ alkyl esters thereof, hydroxystyrene, and acyloxystyrene.

In the other embodiment wherein monomers free of an ion exchangeable functional group, but capable of imparting an ion exchangeable functional group through chemical reaction are used, first a radical-polymerizable monomer free of an ion exchangeable functional group is graft polymerized, and sulfonation or the like is then performed utilizing chemical reaction, thereby imparting an ion exchangeable functional group. Illustrative examples of radical-polymerizable hydrocarbon monomers free of an ion exchangeable functional group, but capable of imparting an ion exchangeable functional group through chemical reaction include styrene, α-methylstyrene, α-methoxystyrene, α-bromostyrene, vinyltoluene, and hydroxystyrene. Notably, the introduction of a sulfonic acid group into the radical-polymerizable monomer may be conducted by reaction with a sulfonating agent such as chlorosulfonic acid, sulfuric acid or fuming sulfuric acid.

Like the aforementioned radical-polymerizable hydrocarbon monomers, the preferred radical-polymerizable fluorinated hydrocarbon monomers are those radical-polymerizable fluorinated hydrocarbon monomers which have an ion exchangeable functional group, or are free of an ion exchangeable functional group, but capable of imparting an ion exchangeable functional group through chemical reaction. With respect to these radical-polymerizable fluorinated hydrocarbon monomers, suitable functional groups which can be converted into an ion exchangeable functional group through hydrolysis include -SO₂F, -SO₂NH₂, -COOH, -CN, -COF and -COOR wherein R is C₁-C₁₀ alkyl. These functional groups are preferred because they are readily convertible into sulfonic acid or carboxylic acid groups through hydrolysis.

Illustrative examples of the radical-polymerizable fluorinated hydrocarbon monomers include the following. trifluorovinylsulfonyl halides:

CF₂=CFSO₂X wherein X is -F or -Cl

trifluorovinyl ether sulfonyl halides:

CF₂=CF-O-SO₂X wherein X is -F or -Cl

perfluoroallyl fluorosulfide:

CF₂=CFCF₂-O-SO₂F

perfluorovinyl ether sulfonylfluoride:

CF₂=CF-O-CF₂CF(CF₃)O(CF₂)₂SO₂F

trifluorostyrene:

CF₂=CFC₆H.

trifluoroacrylates:

CF₂=CFCOOR wherein R is -CH₃ or -C(CH₃)₃

vinyloxytetrafluoroethane sulfonylfluoride:

CH₂=CH-O-CF₂CF₂SO₂F

allyloxytetrafluoroethane sulfonylfluoride:

CH₂=CHCH₂-O-CF₂CF₂SO₂F

allyloxytetrafluoroethoxytetrafluoroethane sulfonylfluoride:

CH₂=CHCH₂(OCF₂CF₂)₂SO₂F

The other radical-polymerizable monomer to be co-grafted, i.e., radical-polymerizable monomer having a hydroxysilyl or alkoxysilyl group is preferably selected from monomers having a trihydroxysilyl or trialkoxysilyl group, especially monomers having a trialkoxysilyl group. Examples include vinyltrimethoxysilane, vinyltriethoxysilane, vinyltris(β-methoxyethoxy)silane, γ-acryloxypropylmethyldimethoxysilane, γ-acryloxypropylmethyldiethoxysilane, γ-acryloxypropyltrimethoxysilane, γ-acryloxypropyltriethoxysilane, γ-methacryloxypropylmethyldimethoxysilane, γ-methacryloxypropylmethyldiethoxysilane, γ-methacryloxypropyltrimethoxysilane, γ-methacryloxypropyltriethoxysilane, γ-(acryloxyethoxy)propyltrimethoxysilane, γ-(acryloxyethoxy)propyltriethoxysilane, γ-(methacryloxyethoxy)propyltrimethoxysilane, γ-(methacryloxyethoxy)propyltriethoxysilane, hexenyltrimethoxysilane, hexenyltriethoxysilane, decenyltrimethoxysilane, decenyltriethoxysilane, etc. Among others, monomers having a styryl group in a molecule such as styryltrimethoxysilane, styryltriethoxysilane, styrylethyltrimethoxysilane, styrylethyltriethoxysilane, vinylphenethyltrimethoxysilane, and vinylphenethyltriethoxysilane are preferred since they are able to significantly increase the content of alkoxysilyl groups in the grafted film. In particular, radical-polymerizable monomers having a styryl group are preferred. These polymerizable monomers having a hydroxysilyl or alkoxysilyl group may be used alone or in combination of two or more.

Notably, in the co-graft-polymerization process, another radical-polymerizable monomer may be co-grafted.

In the invention, the radical-polymerizable monomer capable of introducing an ion conductive group (A) and the radical-polymerizable monomer having a hydroxysilyl or alkoxysilyl group (B) may be combined in a ratio A/B in the range of 90/10 to 10/90 (molar ratio), preferably 80/20 to 50/50 (molar ratio). Too much amounts of component (A) may lead to a graft polymer having a less content of hydroxysilyl or alkoxysilyl group whereas too small amounts of component (A) may lead to a film which is brittle.

Notably, the other radical-polymerizable monomer is preferably used in an amount of 0 to 900 mol% relative to the total amount (100 mol%) of the radical-polymerizable monomer capable of introducing an ion conductive group and the radical-polymerizable monomer having a hydroxysilyl or alkoxysilyl group.

If necessary, a crosslinkable monomer, typically a monomer having a plurality of vinyl groups such as divinylbenzene may be admixed with the radical-polymerizable monomers in an amount of 0.1 to 15 mol%. The combined use of such a crosslinkable monomer enables to introduce a crosslinked structure into a graft chain.

The radical-polymerizable monomers to be grafted to the radiation-irradiated resin are preferably used in an amount of 1,000 to 100,000 parts by weight, more preferably 5,000 to 30,000 parts by weight relative to 100 parts by weight of the resin. A less amount of the radical-polymerizable monomers may lead to short contact whereas a larger amount may fail in efficient utilization of the radical-polymerizable monomers.

In the practice of the invention, a solvent may be used during graft reaction. Those solvents in which the radical-polymerizable monomers may be uniformly dissolved are preferred. Exemplary solvents which can be used herein include ketones such as acetone and methyl ethyl ketone; esters such as ethyl acetate and butyl acetate; alcohols such as methyl alcohol, ethyl alcohol, propyl alcohol, and butyl alcohol; ethers such as tetrahydrofuran and dioxane; N,N-dimethylformamide, N,N-dimethylacetamide; aromatic hydrocarbons such as benzene and toluene; aliphatic or alicyclic hydrocarbons such as n-heptane, n-hexane and cyclohexane; or mixtures thereof.

The solvent is desirably used in such an amount as to give a monomer/solvent (weight) ratio between 0.01 and 20. A monomer/solvent (weight) ratio above 20 may make it difficult to control the number of monomer units in the graft chain whereas a ratio below 0.01 may lead to too low a degree of grafting. The preferred monomer/solvent (weight) ratio is between 0.2 and 10.

In the practice of the invention, the reaction atmosphere under which graft polymerization is performed is preferably regulated to an oxygen concentration of 0.05 to 5% (% by volume, ditto hereinafter). It is believed that oxygen in the reaction atmosphere can react with radicals within the system to create carbonyl or peroxy radicals which function to retard further progress of the reaction. If the oxygen concentration is less than 0.05%, the radical-polymerizable monomers may polymerize by themselves to produce a gel which is insoluble in the solvent, some reactant is thus wasted, and gel removal is time consuming. An oxygen concentration in excess of 5% may lead to a lower degree of grafting. The desired oxygen concentration is 0.1 to 3% and more desirably 0.1 to 1%. The gas that is used herein except oxygen may be an inert gas such as nitrogen or argon.

The preferred reaction conditions for graft polymerization include a temperature of 0 to 100°C, especially 40 to 80°C and a time of 1 to 40 hours, especially 4 to 20 hours. In the embodiment wherein the radical-polymerizable monomer capable of introducing an ion-exchangeable functional group is grafted, means for causing to introduce the ion-exchangeable functional group is taken at this point of time. The ion-exchangeable functional group to be introduced may be any of the above-listed groups, and preferably sulfonic acid group. The sulfonic acid group may be introduced by reaction with a sulfonating agent such as chlorosulfonic acid, sulfuric acid or fuming sulfuric acid. The most preferred sulfonating agent is chlorosulfonic acid. The sulfonic acid group may be introduced through immersion in a solution of 0.01 to 2 M (mol/L) chlorosulfonic acid in dichloroethane or dichloromethane at -20°C to 50°C for 1 to 20 hours and subsequent immersion in deionized water at 50°C to 80°C for 1 to 40 hours.

Next the grafted resin membrane is impregnated with a phosphorus-containing monomer having a hydroxysilyl or alkoxysilyl group, preferably trihydroxysilyl or trialkoxysilyl group, preferably followed by crosslinking through dehydration-condensation of the monomer with hydroxysilyl or alkoxysilyl groups in the grafted polymer.

Examples of the phosphorus-containing monomer having a hydroxysilyl or alkoxysilyl group include 3-trihydroxysilylpropyl methylphosphonate, 3-trimethoxysilylpropyl methylphosphonate, 3-triethoxysilylpropyl methylphosphonate, diethoxyphosphate ethyltriethoxysilane, dimethoxyphosphate ethyltrimethoxysilane, 2-(diphenylphosphino)ethyl dimethylethoxysilane, and 2-(diphenylphosphino)ethyl triethoxysilane. Of these, 3-trihydroxysilylpropyl methylphosphonate is preferred since it is water soluble and can be handled as an aqueous solution upon impregnation of the grafted membrane therewith.

Herein the phosphorus-containing monomer may be dissolved in a solvent prior to use. Exemplary solvents include water, methanol, ethanol, isopropyl alcohol, dimethylacetamide, and dimethylformamide. The phosphorus-containing monomer is preferably in a concentration of 10 to 80% by weight, and more preferably 20 to 50% by weight.

The method of impregnating the grafted membrane may be simply by immersing the grafted membrane in a solution of the monomer. The immersion time is preferably at least 1 hour, more preferably 2 to 10 hours, and even more preferably 3 to 6 hours. If the time is less than 1 hour, the grafted membrane may not be fully impregnated with the monomer. The immersion temperature is preferably 0 to 100°C, and more preferably 40 to 80°C.

An impregnating amount of the phosphorus-containing monomer is preferably to give a content of 10 to 100 ppm, and more preferably 30 to 100 ppm of phosphorus atom.

To provoke condensation reaction between the hydroxysilyl or alkoxysilyl group in the grafted polymer and the hydroxysilyl or alkoxysilyl group of the monomer with which the resin has been impregnated, the grafted membrane after impregnation with the monomer may be heated in an inert gas atmosphere under a reduced pressure (typically 1 to 10 Torr) or atmospheric pressure at 100 to 200°C for several hours (typically 2 to 8 hours). A tin base catalyst such as dibutyltin dilaurate may be used in order that the reaction take place under moderate conditions.

It has been described that the SPE membrane of the invention can be prepared by irradiating a fluorocarbon or hydrocarbon resin with radiation, co-graft-polymerizing a radical-polymerizable monomer and a radical-polymerizable monomer having a hydroxysilyl or alkoxysilyl group to the resin, optionally sulfonating, thereafter impregnating the resin with a phosphorus-containing monomer having a hydroxysilyl or alkoxysilyl group, and preferably heating to provoke condensation reaction thereof with the hydroxysilyl or alkoxysilyl group in the grafted polymer.

The fuel cell SPE membrane of the invention is used to construct an electrolyte membrane-electrode assembly for fuel cells by disposing the electrolyte membrane between first and second electrodes each having a catalyst carried thereon (or fuel and air electrodes) in close contact therewith. This electrolyte membrane-electrode assembly may be manufactured by the following method.

Electrodes serving as an anode (fuel electrode) and a cathode (air electrode) are joined to the fuel cell SPE membrane defined above. Herein, the electrode comprises a porous support and a catalyst layer. For the porous support, carbon paper, carbon cloth or the like is preferably used. Also preferably the catalyst layer comprises a nano-particle catalyst and a proton-conductive polymer electrolyte.

The nano-particle catalysts used herein include platinum group metal nano-particle catalysts and platinum alloy nano-particle catalysts. The platinum group metal nano-particle catalysts include platinum, ruthenium, palladium, rhodium, iridium, osmium and the like. The platinum alloy nano-particle catalysts include alloys of platinum with at least one metal selected from among ruthenium, palladium, rhodium, iridium, osmium, molybdenum, tin, cobalt, nickel, iron, chromium and the like. The platinum alloy should preferably contain at least 5% by weight, and more preferably at least 10% by weight of platinum.

The platinum group metal nano-particle catalysts and platinum alloy nano-particle catalysts used herein have a particle size (average particle diameter) of up to 4 nm, preferably 1 to 4 nm, and more preferably 2 to 3.5 nm. A catalyst having a particle size in excess of 4 nm has a smaller specific surface area, giving rise to a problem of lower catalytic activity. It is noted that the particle size is as observed under a transmission electron microscope (TEM).

The nano-particle catalysts used herein may be those supported on carbon, and commercially available catalysts may be used.

The nano-particle catalyst has a catalyst loading of 0.05 to 10 mg/cm², preferably 0.3 to 5 mg/cm² in each electrode catalyst layer. Too small a catalyst loading may fail to exert the catalytic effect whereas a catalyst loading in excess of 10 mg/cm² may provide a thicker catalyst layer to detract from the cell output.

The proton-conductive polymer electrolytes having a sulfonic group which are advantageously used herein include perfluoro electrolytes as typified by Nafion® (duPont), hydrocarbon electrolytes as typified by styrenesulfonic acid-butadiene copolymers, and inorganic/organic hybrid electrolytes as typified by sulfonic acid-containing alkoxysilane and terminally silylated oligomers.

Further, carbon nano-particles having no catalyst supported thereon may be compounded for the purpose of improving electron conductivity.

Notably, to a catalyst paste from which the catalyst layer is formed, a solvent may be added for the purpose of improving coating operation when the catalyst paste is applied to the electrode and/or electrolyte membrane. Examples of the solvent include alcohols such as methyl alcohol, ethyl alcohol, n-propyl alcohol, isopropyl alcohol, n-butyl alcohol, ethylene glycol, and glycerol; ketones such as acetone and methyl ethyl ketone; esters such as ethyl acetate and butyl acetate; ethers such as tetrahydrofuran and dioxane; aromatic hydrocarbons such as benzene and toluene; aliphatic or alicyclic hydrocarbons such as n-heptane, n-hexane and cyclohexane; and polar solvents such as water, dimethyl sulfoxide, N,N-dimethylformamide, N,N-dimethylacetamide, formamide, N-methylformamide, N-methylpyrrolidone, ethylene carbonate, and propylene carbonate. These solvents may be used alone or in admixture of two or more. Of these, polar solvents such as isopropyl alcohol, water, and N,N-dimethylformamide are desirable.

Also a fluorocarbon resin may be added to the paste in order to increase the porosity of the catalyst layer to facilitate transfer of water. Suitable fluorocarbon resins include polytetrafluoroethylene (PTFE), tetrafluoroethylene-hexafluoropropylene copolymers (FEP), tetrafluoroethylene-perfluoroalkyl vinyl ether copolymers (PFA), polychlorotrifluoroethylene (PCTFE), ethylene-tetrafluoroethylene copolymers (ETFE), polyvinylidene fluoride (PVDF), polyvinyl fluoride (PVF), ethylene-trifluoroethylene copolymers (ECTFE), which may be used alone or in combination of two or more. As the fluorocarbon resin, commercially available resins having a number average molecular weight of the order of 100,000 to 600,000 as measured by GPC versus polystyrene standards may be used.

Although the amounts of the foregoing components used vary over a wide range, the preferred amounts are 50 to 200 parts by weight of the proton-conductive polymer electrolyte, 0 to 5,000 parts by weight, more specifically 100 to 1,000 parts by weight of the solvent, and 10 to 400 parts by weight, more specifically 40 to 130 parts by weight of the fluorocarbon resin, relative to 100 parts by weight of the catalyst particles.

From the catalyst paste described above, a catalyst layer is formed in a standard way by coating the paste onto the electrolyte membrane or porous electrode substrate, and if the solvent has been added to the paste, removing the solvent.

After the catalyst layer is formed on at least one of the electrolyte membrane and the electrode substrate, the electrolyte membrane having opposite surfaces may be sandwiched between electrode substrates and hot pressed together to construct a membrane-electrode assembly. While the hot pressing temperature may be selected as appropriate depending on the electrolyte membrane used or the type and blend ratio of fluorocarbon resin and other components in the catalyst paste used, the desired temperature range is from 50 to 200°C, and more desirably 80 to 180°C. Temperatures below 50°C may provide an insufficient joint whereas temperatures above 200°C may cause degradation of the electrolyte membrane or the resin component in the catalyst layer. While the applied pressure level may be selected as appropriate depending on the electrolyte membrane and/or the type and blend ratio of fluorocarbon resin and other components in the catalyst paste and the type of porous electrode substrate, the desired pressure range is from 1 to 100 kgf/cm², and more desirably 10 to 100 kgf/cm². Pressures below 1 kgf/cm² may provide an insufficient joint whereas pressures above 100 kgf/cm² may reduce the porosity of the catalyst layer and electrode substrate, leading to degraded performance.
The electrode membrane-electrode assembly may be manufactured in this way.

Understandably, the electrolyte membrane of the invention may be used as a SPE membrane disposed between fuel and air electrodes in a fuel cell. When a catalyst layer/fuel diffusion layer and a separator are disposed on opposing surfaces of the SPE membrane, the membrane is utilized as an effective electrolyte membrane, typically for direct methanol fuel cells. Thus a fuel cell having improved cell performance is obtainable. It is noted that the structure and materials of fuel and air electrodes and the structure of the fuel cell may be well-known ones.

### EXAMPLE

Examples and Comparative Examples are given below for illustrating the invention, but the invention is not limited thereto. In Examples, all compounding amounts are parts by weight.

### Example 1

An ethylene-tetrafluoroethylene (ETFE) film (25 µm thick, 6x5 cm rectangular, weight 0.13 part) was placed in an electron beam (EB) irradiation equipment (Light Beam L by Iwasaki Electric Co., Ltd.) where the film was irradiated in a nitrogen atmosphere at room temperature with EB at an accelerating voltage of 100 kV so as to give a dose of 100 kGy. The film was immersed in a solution containing 6.9 parts of α-methylstyrene, 13.1 parts of styryltrimethoxysilane and 4 parts of dimethylacetamide which had been depleted of oxygen by nitrogen bubbling, and heated at 60°C for 16 hours for graft polymerization. This resulted in a grafting degree of 102%. The atmosphere for grafting was a nitrogen atmosphere having an oxygen concentration of 0.1%.

The graft-polymerized film was immersed in a 0.2M chlorosulfonic acid/dichloroethane mixture, heated at 50°C for 6 hours, and immersed in deionized water at 60°C overnight for hydrolysis, yielding a membrane having sulfonic acid groups. Sequentially the membrane was immersed in a solution of 3-trihydroxysilylpropyl methylphosphonate in water and alcohol having a concentration of 30% by weight overnight at 60°C. The membrane was taken out of the solution, lightly wiped with cloth to remove the remaining solution from the membrane surface, and heated at 100°C under reduced pressure for 6 hours, obtaining a phosphorus-doped SPE membrane. The membrane had a phosphorus content of 40 ppm. The membrane had a weight gain of 3% before and after the impregnation. The membrane showed a weight loss of 5% after it was immersed in a 3% hydrogen peroxide aqueous solution at 80°C for 20 hours.

### Comparative Example 1

An ETFE film (25 µm thick, 6x5 cm rectangular, weight 0.13 part) was placed in an EB irradiation equipment (Light Beam L by Iwasaki Electric Co., Ltd.) where the film was irradiated in a nitrogen atmosphere at room temperature with EB at an accelerating voltage of 100 kV so as to give a dose of 100 kGy. The film was immersed in a solution containing 6.9 parts of α-methylstyrene, 13.1 parts of styryltrimethoxysilane and 4 parts of dimethylacetamide which had been depleted of oxygen by nitrogen bubbling, and heated at 60°C for 16 hours for graft polymerization. This resulted in a grafting degree of 101%. The atmosphere for grafting was a nitrogen atmosphere having an oxygen concentration of 0.1%.

The graft-polymerized film was immersed in a 0.2M chlorosulfonic acid/dichloroethane mixture, heated at 50°C for 6 hours, and immersed in deionized water at 60°C overnight for hydrolysis, yielding a membrane having sulfonic acid groups. Sequentially it was heated at 100°C under reduced pressure for 6 hours, obtaining a SPE membrane. The membrane showed a weight loss of 50% after it was immersed in a 3% hydrogen peroxide aqueous solution at 80°C for 20 hours.

## Claims

1. A method for producing a solid polymer electrolyte membrane, comprising the steps of
irradiating a fluorocarbon resin or hydrocarbon resin with radiation,
co-graft-polymerizing a radical-polymerizable monomer having an ion-exchangeable functional group or capable of introducing an ion-exchangeable functional group and a radical-polymerizable monomer having a hydroxysilyl or alkoxysilyl group to the resin,
thereafter, when the radical-polymerizable monomer capable of introducing an ion-exchangeable functional group is used, causing the monomer to introduce the ion-exchangeable functional group, and
impregnating the resin with a phosphorus-containing monomer having a hydroxysilyl or alkoxysilyl group.

2. A method for producing a solid polymer electrolyte membrane according to claim 1, further comprising heat treating the resin after impregnation for provoking condensation reaction between the hydroxysilyl or alkoxysilyl group in the grafted polymer and the hydroxysilyl or alkoxysilyl group of the phosphorus-containing monomer with which the resin has been impregnated.

3. A method for producing a solid polymer electrolyte membrane according to claim 1 or 2, wherein the fluorocarbon resin is at least one member selected from the group consisting of polytetrafluoroethylene, tetrafluoroethylene-perfluoroalkyl vinyl ether copolymers, tetrafluoroethylene-hexafluoropropylene copolymers, and ethylene-tetrafluoroethylene copolymers.

4. A method for producing a solid polymer electrolyte membrane according to claim 1, 2 or 3, wherein the radical-polymerizable monomer having a hydroxysilyl or alkoxysilyl group is a polymerizable monomer having a styryl group in the molecule.

5. A solid polymer electrolyte membrane **characterized in that** it is prepared by the method of any one of claims 1 to 4.

6. A fuel cell **characterized in that** the solid polymer electrolyte membrane of claim 5 is disposed between a fuel electrode and an air electrode.

7. A fuel cell according to claim 6 which is of direct methanol type using methanol as the fuel.

## Patentansprüche

1. Herstellungsverfahren für eine feste Polymerelektrolytmembran, umfassend die Schritte
Bestrahlen eines Fluorkohlenstoffharzes oder eines Kohlenwasserstoffharzes mit Strahlen,
Pfropfcopolymerisierung eines mit Radikalen polymerisierbaren Monomers mit lonenaustausch-Funktionsgruppe, oder das in der Lage ist, eine lonenaustausch-Funktionsgruppe aufzunehmen, und eines mit Radikalen polymerisierbaren Monomers mit einer Hydroxysilyl- oder einer Alkoxysilylgruppe auf das Harz,
nachfolgend, wird das mit Radikalen polymerisierbare Monomer, das in der Lage ist, eine lonenaustausch-Funktionsgruppe aufzunehmen, genutzt, das Monomer dazu bringen, dass die lonenaustausch-Funktionsgruppe eingeführt wird, und
Imprägnieren des Harzes mit einem phosphorhaltigen Monomer mit einer Hydroxysilyl- oder einer Alkoxysilylgruppe.

2. Herstellungsverfahren für eine feste Polymerelektrolytmembran gemäß Anspruch 1, zudem umfassend Hitzebehandlung des Harzes nach dem Imprägnieren zum Auslösen einer Kondensationsreaktion zwischen der Hydroxysilyl- oder Alkoxysilylgruppe im Pfropfpolymer und der Hydroxysilyl- oder Alkoxysilylgruppe des phosphorhaltigen Monomers, mit welchem das Harz imprägniert wurde.

3. Herstellungsverfahren für eine feste Polymerelektrolytmembran gemäß Anspruch 1 oder 2, wobei das Fluorkohlenstoffharz mindestens ein Mitglied ist aus der Gruppe Polytetrafluoroethylen, Tetrafluoroethylen-Perfluoroalkylvinylether-Copolymere, Tetrafluoroethylen-Hexafluoropropylen-Copolymere und Ethylen-Tetrafluoroethylen-Copolymere.

4. Herstellungsverfahren für eine feste Polymerelektrolytmembran gemäß Anspruch 1, 2 oder 3, wobei das mit Radikalen polymerisierbare Monomer mit einer Hydroxysilyl- oder einer Alkoxysilylgruppe ein polymerisierbares Monomer mit einer Styrylgruppe im Molekül ist.

5. Feste Polymerelektrolytmembran, **dadurch gekennzeichnet, dass** sie nach einem Verfahren aus irgendeinem der Ansprüche 1 bis 4 hergestellt wird.

6. Brennstoffzelle, **dadurch gekennzeichnet, dass** die feste Polymerelektrolytmembran aus Anspruch 5 zwischen einer Brennstoffelektrode und einer Luftelektrode angeordnet ist.

7. Brennstoffzelle gemäß Anspruch 6, welche von der Direktmethanolart ist und Methanol als Brennstoff verwendet.

## Revendications

1. Un procédé de production d'une membrane d'électrolyte à polymère solide, comprenant les opérations suivantes :
l'irradiation d'une résine de fluorocarbure ou d'une résine d'hydrocarbure avec un rayonnement,
une co-polymérisation-greffe d'un monomère polymérisable par radical possédant un groupe fonctionnel échangeur d'ions ou capable d'introduire un groupe fonctionnel échangeur d'ions et un monomère polymérisable par radical possédant un groupe hydroxysilyle ou alkoxysilyle dans la résine,
ensuite, lorsque le monomère polymérisable par radical capable d'introduire un groupe fonctionnel échangeur d'ions est utilisé, amener le monomère à introduire le groupe fonctionnel échangeur d'ions, et
l'imprégnation de la résine avec un monomère contenant du phosphore possédant un groupe hydroxysilyle ou alkoxysilyle.

2. Un procédé de production d'une membrane d'électrolyte à polymère solide selon la revendication 1, comprenant en outre un traitement thermique de la résine après imprégnation de façon à provoquer une réaction de condensation entre le groupe hydroxysilyle ou alkoxysilyle dans le polymère greffé et le groupe hydroxysilyle ou alkoxysilyle du monomère contenant du phosphore avec lequel la résine a été imprégnée.

3. Un procédé de production d'une membrane d'électrolyte à polymère solide selon la revendication 1 ou 2, où la résine de fluorocarbure est au moins un membre sélectionné dans le groupe se composant de polytétrafluoroéthylène, copolymères d'éther vinylique tétrafluoroéthylène-perfluoroalkyle, copolymères tétrafluoroéthylène-hexafluoropropylène et copolymères éthylène-tétrafluoroéthylène.

4. Un procédé de production d'une membrane d'électrolyte à polymère solide selon la revendication 1, 2 ou 3, où le monomère polymérisable par radical possédant un groupe hydroxysilyle ou alkoxysilyle est un monomère polymérisable possédant un groupe styryle dans la molécule.

5. Une membrane d'électrolyte à polymère solide **caractérisée en ce qu'**elle est préparée par le procédé selon l'une quelconque des revendications 1 à 4.

6. Une pile à combustible **caractérisée en ce que** la membrane d'électrolyte à polymère solide selon la revendication 5 est disposée entre une électrode à combustible et une électrode à air.

7. Une pile à combustible selon la revendication 6, qui est du type méthanol direct utilisant du méthanol en tant que combustible.
